# EUROPEAN PATENT SPECIFICATION

(11) **EP 1 879 285 B1**
(45) Date of publication and mention of the grant of the patent: **08.09.2010**
(21) Application number: 06396012.4
(22) Date of filing: 12.07.2006
(51) Int. Cl.: H02M 3/337

(54) **Power supply apparatus using half-bridge circuit**
Eine Halbbrücke verwendende Stromversorgung
Alimentation de puissance utilisant un demi-pont

(43) Date of publication of application: 16.01.2008
(73) Proprietor: Averd Co. Ltd., Goyang-si, Gyeonggi-do 411-722 (KR)
(72) Inventor: Noh, Si Youl, Yangju-si, Kyunggi-do (KR); Yang, Min Sung, Seoul (KR)
(74) Representative: Simmelvuo, Markku Kalevi

(56) References cited:
- EP-A2- 0 758 159
- JP-A- 2002 125 324
- JP-A- 2005 252 708
- US-A- 5 488 269
- US-A1- 2004 105 287

## Description

### BACKGROUND OF THE INVENTION

### Field of the Invention

The present invention relates to a power supply apparatus using a half-bridge circuit, and more particularly to a power supply apparatus using a half-bridge type driving circuit, which is intended for the purpose of the compensation of a power factor, the achievement of a low crest factor and the maintenance of a constant output by being applied to a ballast or an inverter.

### Background of the Related Art

Publication EP 0758159 A2 discloses a converter where the input signal is frequency-modulated by a pulse width modulated signal. The converter includes a duty ratio adjust circuit which further feeds a driving circuit comprising a pulse width modulator. The driving circuit also receives a feedback signal via a detecting circuit. The driving circuit controls first and second switching elements which comprise FET transistors. The FET output is further filtered and directed to a piezoelectric transformer which gives the converter output signal for the load.

As another background art solution from a general point of view, an electronic ballast or an inverter used in a lamp converts a commercial power frequency into a high frequency and serves as controlling current so as to prevent over-current from flowing. The ballast may use various types of power factor compensation circuits in order to reduce current consumption, extend life span, and improve product reliability.

For example, a diode power factor compensation circuit may be used to vary a frequency as a method for accomplishing a high power factor and a low crest factor.

Although this method can achieve a high power factor and a low crest factor at low cost without using a dedicated integrated circuit (IC) of high cost for power factor compensation, there are problems due to a wide frequency variable range.

Specifically, if a frequency is raised, the efficiency of a resonance circuit deteriorates and thus the efficiency of the ballast is lowered. A wide frequency bandwidth increases an electro-magnetic interference (EMI) noise. In addition, a high frequency causes an increase in a power loss of a switching device and an increase in energy supplied to a filament, thereby shortening the life of a lamp tube and lowering the efficiency of the ballast.

If it is desired to control an output by varying only a frequency, since an output control dynamic characteristic is low, it is very difficult to set a feedback circuit for control. Moreover, since the overall characteristics of the ballast are poor, it is difficult to actually use the diode power factor compensation circuit.

Especially, when an input voltage is varied, since there are wide variations in power consumption, a crest factor, filament power, etc., a big difference occurs between a target characteristic value and an actual value.

Meanwhile, the use of the dedicated IC for power factor compensation, instead of the diode power factor compensation circuit, leads to an economic burden of cost, and an increase in the number of components and in size.

### SUMMARY OF THE INVENTION

Accordingly, the present invention has been made in view of the aforementioned problems occurring in the prior art, and it is an object of the present invention to provide a power supply apparatus using a half-bridge circuit usable in a ballast or an inverter, capable of improving an output control dynamic characteristic by varying a frequency and controlling a pulse width.

It is another object of the present invention to provide a power supply apparatus using a half-bridge circuit usable in a ballast or an inverter, capable of achieving a high power factor, a constant output and a low crest factor characteristics without using an additional high power factor circuit.

It is still another object of the present invention to provide a power supply apparatus using a half-bridge circuit usable in a ballast or an inverter, capable of raising power efficiency, extending the life of a lamp tube, and improving light conversion efficiency. According to the present invention there is provided a power supply apparatus according to claim 1.

The line voltage detecting means may include a low pass filter for smoothing the input power source and converting the smoothed input power source into a direct current (DC) voltage, and a line voltage detector for supplying an output signal to the error amplifying means if the voltage of the low pass filter is less than a prescribed level.

The line voltage detector may further generate an output signal having a logic value if the voltage of the low pass filter is more than a prescribed level.

The voltage divider may receive a dimming control voltage instead of the reference voltage.

The power supply apparatus may further include a voltage controlled oscillator for providing a variable frequency corresponding to an output level of the error amplifying means to the pulse width modulating means, wherein the pulse width modulating means may generate a pulse having a frequency of a signal provided by the voltage controlled oscillator and a variable pulse width corresponding to the output level of the error amplifying means.

The power supply apparatus may further include a soft start timer for controlling the voltage controlled oscillator and the error amplifying means during initial starting, controlling an output to be a high frequency and a maximum pulse width during initial power source supply, gradually lowering a frequency, and stopping an operation after a given time elapses.

The dead time controlling means may include a first delay for outputting the first pulse applying a first dead time by delaying a rising time point of an output of the pulse width modulating means by a given time, and a second delay for outputting the second pulse applying a second dead time by inverting the output of the pulse width modulating means and then delaying a falling time point of the inverted signal by a given time.

The driving means may include a high side driver for outputting a high side driving signal by the first pulse, a low side driver for outputting a low side driving signal by the second pulse, a first switching device for switching the high side of the AC power source supplied to the load by an output of the high side driver, and a second switching device for switching the low side of the AC power source provided to the load by an output of the low side driver.

The power supply apparatus may further include a high power factor circuit for controlling a power factor of the input power source provided to the load, and the load may be a cold cathode fluorescent lamp (CCFL).

### BRIEF DESCRIPTION OF THE DRAWINGS

The above and other objects, features and advantages of the present invention will be apparent from the following detailed description of the preferred embodiments of the invention in conjunction with the accompanying drawings, in which:

FIG. 1 is a circuit diagram illustrating a power supply apparatus using a half-bridge circuit applied to a ballast according to a preferred embodiment of the present invention;

FIG. 2 is a detailed block diagram illustrating an example of the line voltage detector in FIG. 1;

FIG. 3 is a waveform chart for describing the control of the soft start timer in FIG. 1;

FIG. 4 is a detailed block diagram illustrating an example of the dead time controller in FIG. 1;

FIGs. 5A and 5B are waveform charts for describing an operation of the dead time controller in FIG. 4;

FIG. 6 is a waveform chart for describing a variation in a pulse width corresponding to a variation in an output level of the error amplifier in FIG. 1;

FIGs. 7A to 7D are waveform charts for describing a variation in a pulse width corresponding to a variation in a frequency and in an output level of the error amplifier in FIG. 1;

FIG. 8 is a circuit diagram a circuit diagram illustrating a power supply apparatus using a half-bridge circuit to which a simple high power factor circuit is applied according to another preferred embodiment of the present invention;

FIGs. 9A and 9B are waveform charts illustrating an output of the rectifier circuit in FIG. 8 and an output of the error amplifier corresponding thereto, respectively;

FIG. 10A a waveform chart for describing a voltage of a positive input terminal of the error amplifier in FIG. 8 and an output power corresponding thereto when an input power voltage is lowered under a prescribed level;

FIG. 10B is a waveform chart illustrating an output of the error amplifier corresponding to a variation in an input voltage;

FIG. 11 is a circuit diagram a circuit diagram illustrating a power supply apparatus using a half-bridge circuit to which a dimming control voltage is applied according to still another preferred embodiment of the present invention;

FIG. 12 is a circuit diagram illustrating a power supply apparatus using a rectifying high power factor circuit applied to a cold cathode fluorescent lamp (CCFL) inverter circuit using a simple high power factor of a rectifying type having a valley voltage according to another preferred embodiment of the present invention; and

FIGs. 13A to 13C are waveform charts illustrating voltage-current characteristics of an input versus a load.

### DETAILED DESCRIPTION OF THE PREFERRED EMBODIMENT

Reference will now be made in detail to the preferred embodiment of the present invention with reference to the attached drawings.

A power supply apparatus according to a preferred embodiment of the present invention has a configuration that varies a frequency and controls a pulse width. Namely, a pulse width of a signal provided to a load is varied depending on whether a voltage supplied from a power source is high or low and alternatively a frequency of the signal provided to the load may be simultaneously varied. Then a constant output is supplied to the load.

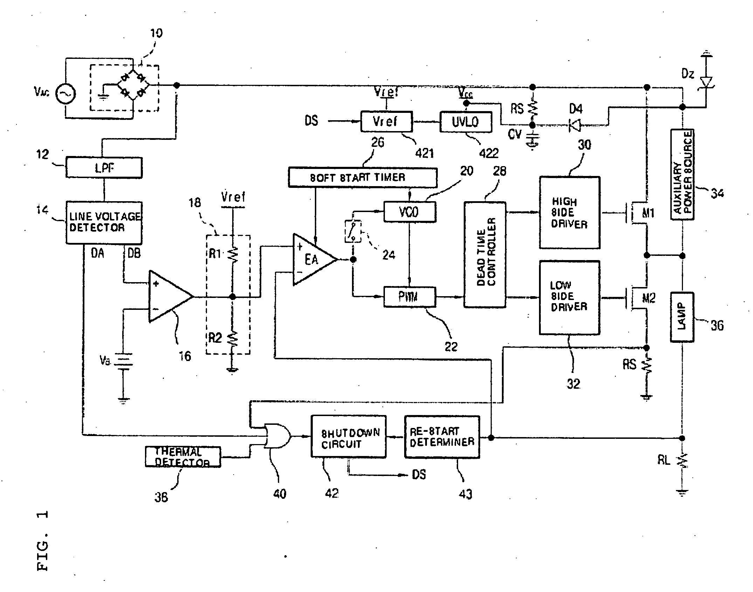

FIG. 1 illustrates a power supply apparatus using a half-bridge circuit applied to a ballast according to a preferred embodiment of the present invention. Referring to FIG. 1, a rectifier circuit 10 includes four bridge coupled diodes and full-wave rectifies an alternative circuit (AC) power source V_{AC}.

The output of the rectifier circuit 10 is provided to a path for driving a lamp 36 that is a load of the rectifier circuit 10 and to a control path for maintaining an output supplied to the load constant.

To drive the load, that is, the lamp 36, the output of the rectifier circuit 10 is provided to a high side transistor M1 connected serially to a low side transistor M2. The high side transistor M1 and the low side transistor M2 are alternately switched and supply current provided from the rectifier circuit 10 to the lamp 36. A power supplied to the lamp 36 is controlled by controlling switching times of the high and low side transistors M1 and M2.

A configuration for controlling the switching of the high and low side transistors M1 and M2 corresponds to the control path for maintaining the output supplied to the load constant.

A node is formed between the high and low side transistors M1 and M2. A connection node between an auxiliary power source 34 and the lamp 36 that are connected in series is connected to the node between the high and low side transistors M1 and M2. A load resistor RL for detecting the amount of current supplied to the lamp 36 by a voltage is connected between the lamp 36 and a ground. A sensing resistor RS for detecting the amount of current flowing into the low side transistor M2 by a voltage is connected between the low side transistor M2 and a ground.

A reference voltage (Vref) circuit 421 for inputting an output DS of a shutdown circuit 42 and controlling the activation a reference voltage Vref, a under-voltage lock-out (UVLO) circuit 422, a re-start resistor RS, a capacitor CV, a backward connected diode D4, and a Zener diode Dz are constructed toward the auxiliary power source 34. The diode D4 and the Zener diode DZ control a back electromotive force and a ripple. The UVLO circuit 422 for implementing under-voltage lock-out starts activation at a high supply voltage (Vcc) during initial activation, and once activated, charges charged to the capacitor CV are instantaneously discharged. Then the Vcc may be lowered. In order not to affect a circuit operation even if the Vcc is instantaneously lowered, a voltage for stopping the circuit operation is set to be lower than a starting voltage by 1.5 to 2 voltages to facilitate the initial starting. Namely, the UVLO circuit 422 corresponds to a comparator having hysteresis.

Meanwhile, the output of the rectifier circuit 10 is provided to a low pass filter (LPF) 12 corresponding to the control path for maintaining the output supplied to the load constant.

The LPF 12 smoothes the AC voltage full-wave rectified by the rectifier circuit 10 and outputs a direct current (DC) voltage corresponding thereto. This DC voltage is supplied to a line voltage detector 14.

The line voltage detector 14 generates an output signal DA having a logic value and an output signal DB having a linear value.

In more detail, if an output of the LPF 12 is more than a prescribed level, the line voltage detector 14 generates the output signal DA for shutting down the entire circuit and supplies the output signal DA to a NOR gate 40. If the output of the LPF 14 is less than a prescribed level, the line voltage detector 14 supplies the output signal DB having a linear value to a positive terminal of a comparator 16.

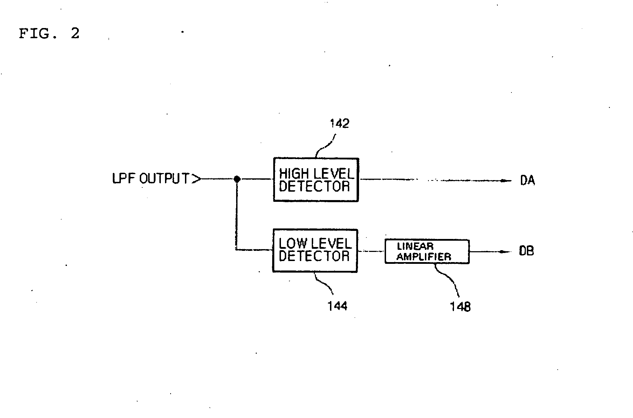

A configuration of the line voltage detector 14 is illustrated in detail in FIG. 2. Referring to FIG. 2, the output of the LPF 12 is supplied to a high level detector 142 and to a low level detector 144. If an input voltage is more than a given level, the high level detector 142 outputs the signal DA corresponding thereto. If the input voltage is less than a given level, the low level detector 144 supplies the input voltage to a linear amplifier 148. Then the linear amplifier 148 generates the output signal DB controlled while maintaining a linear state of the input voltage.

By the output signal DB, the reference voltage provided by an error amplifier EA is gradually reduced, thereby reducing a power supplied to the load.

Referring back to FIG. 1, the comparator 16 receives a given voltage V_{B} through its negative terminal. The comparator 16 compares the output signal DB of the line voltage detector 14 with the voltage V_{B} and supplies an amplified result to a voltage divider 18.

The voltage divider 18 consists of resistors R1 and R2 connected in parallel to a node connected to a positive terminal of the error amplifier EA. The voltage divider 18 adds a divided reference voltage to the output of the comparator 16 and supplies the added result to the positive terminal of the error amplifier EA.

An operation of the error amplifier EA is controlled by a soft start timer 26. The error amplifier EA supplies its output to a voltage controller oscillator (VCO) 20 and a pulse width modulator (PWM) 22. A switch 24 operable by a user may be connected between the VCO 20 and the error amplifier EA so that the user can determine whether to vary a frequency.

Upon receipt of an output of the error amplifier EA, the VCO 20 outputs a frequency signal corresponding to a level of the input voltage and supplies the frequency signal to the PWM 22. If the output of the error amplifier EA is not received, the VCO 20 outputs a fixed frequency signal and supplies the fixed frequency signal to the PWM 22.

The PWM 22 outputs a pulse having a corresponding frequency by the frequency signal supplied from the VCO 20. The width of the pulse is variable according to a voltage level provided by the error amplifier EA.

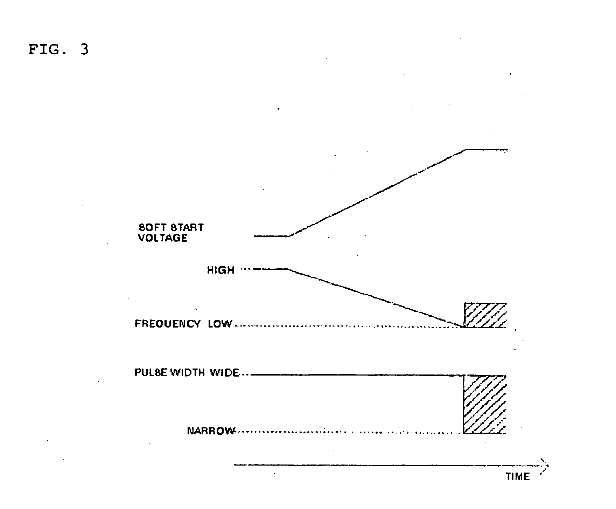

The soft start timer 26 is a circuit for controlling a frequency in order to gradually transfer a power during initial starting. When a power source is initially applied, the soft start timer 26 controls an output to be a high frequency and maximum pulse width and then gradually lowers the frequency. After a given time elapses, an operation of the soft start timer 26 is stopped and a feedback circuit is operated. Then the entire closed circuit is controlled. The operational state of the soft start timer 4 is illustrated in FIG. 3.

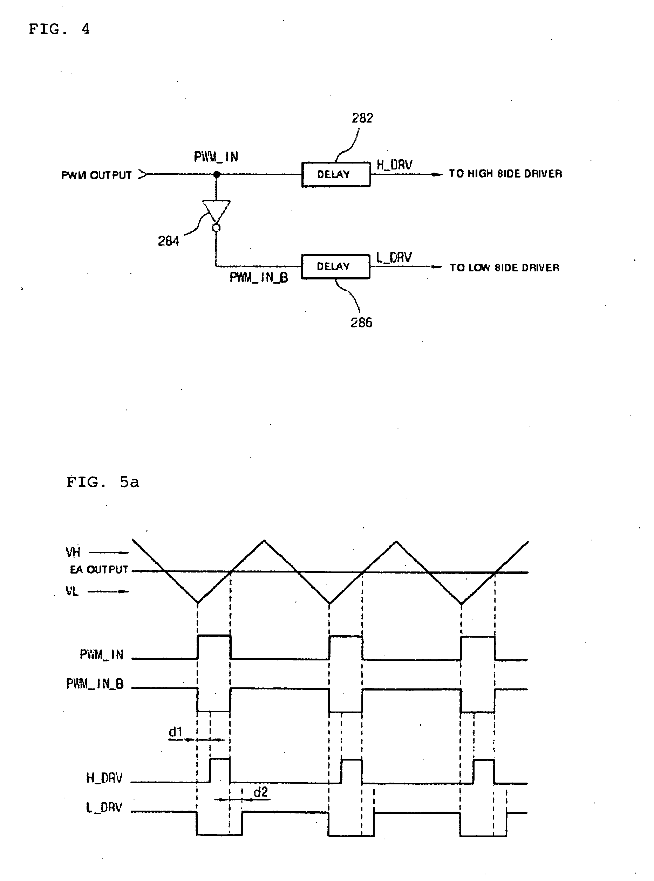

On the other hand, a dead time controller 28 controls an output signal of the VCO 20 so as to have dead times d1 and d2 between a high side signal and a low side signal. The dead time controller 28 may be configured as shown in FIG. 4.

Referring to FIG. 4, the dead time controller 28 includes a delay 282 for delaying a rising time point of an output signal PWM_IN of the PWM 22 by d1, an inverter 284 for inverting the output signal PWM_IN of the PWM 22 and outputting an inverted signal PWM_IN_B, and a delay 286 for delaying a falling time point of an output of the inverter 284 by d2.

An operation of the dead time controller 28 will now be described with reference to FIG. 5A.

The PWM 22 triggers the frequency signal provided by the VCO 20 on the basis of the output of the error amplifier EA and outputs a pulse having a prescribed width. If the output level of the error amplifier EA is high or low, the PWM 22 outputs a pulse having a wide or narrow width corresponding thereto.

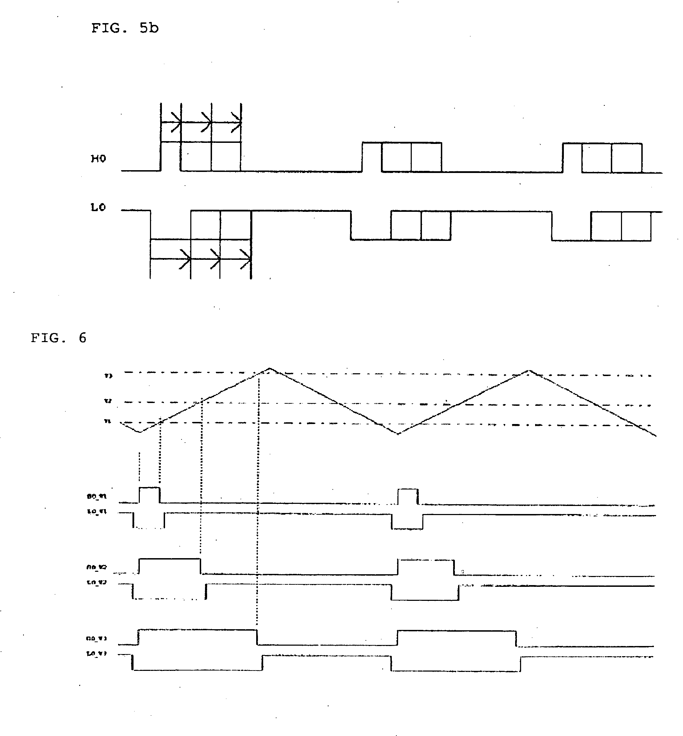

As illustrated in FIG. 5B, the PWM 22 varies the width of a high output pulse HO according to the output voltage of the error amplifier EA. In this case, a constant dead time should be maintained between high and low output pulses HO and LO.

Turning to FIG. 5A, the output PWM_IN of the PWM 22 is converted into a high side driving pulse H_DRV for driving a high side driver 30 by the delay 282. The rising time point of the pulse H_DRV is delayed by d1 as compared to that of the signal PMM_IN and their falling time points are the same.

The output PWM_IN of the PWM 22 is inverted to a signal PWM_IN_B by the inverter 284, and the inverted signal PWM_IN_B is converted to a low side driving pulse L_DRV for driving a low side driver 32 by the delay 286. The rising time points of the pulse L_DRV and the signal PWM_IN_B are the same and the falling time point of the pulse L_DRV is delayed by d2 as compared to that of the signal PWM_IN_B.

The delays 282 and 286 have delay times for determining the dead times d1 and d2 and may have the same or similar delay times.

If the output of the error amplifier EA is variable from V1 to V3 as illustrated in FIG. 6, the dead time controller 280 outputs pulses corresponding to the output level of the error amplifier EA. At this time, even if a pulse width is varied, the dead times are the same.

The dead times are for maintaining a constant time interval in order to prevent the high and low side transistors M1 and M2 from being simultaneously turned on.

FIG. 6 illustrates variations in pulses output from the dead time controller 28 as the output of the error amplifier EA is varied in response to a fixed frequency.

If the current output from the rectifier circuit 10 is reduced and as a result an input voltage is lowered, an output control dynamic characteristic can be improved by varying a frequency as well.

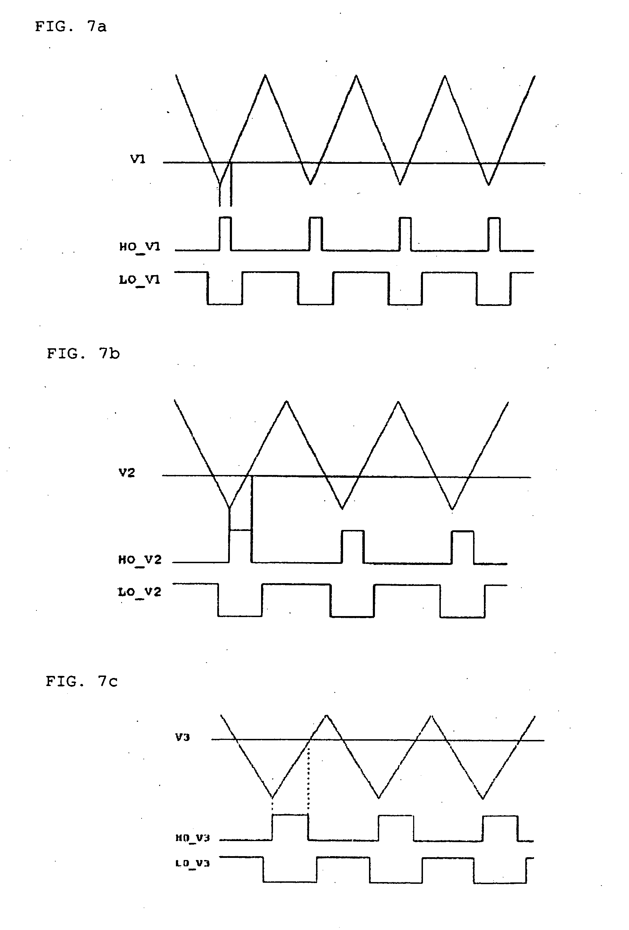

In more detail, a pulse can be controlled in various ways in response to variations both in a frequency and in the output of the error amplifier EA as illustrated in FIGs. 7A to 7C.

FIG. 7A shows a narrow pulse width corresponding to a high frequency and a low output of the error amplifier EA, FIG. 7B a middle pulse width corresponding to a middle frequency and a middle output of the error amplifier EA, and FIG. 7C a wide pulse width corresponding to a low frequency and a high output of the error amplifier EA. It is apparent in FIGs. 7A to 7C that a ratio of a high side pulse width to a low side pulse width differs according to the frequency.

The above-described pulses are input to the high and low side drivers 30 and 32. Then the high and low side transistors M1 and M2 are turned on at different time points, thereby maintaining a constant output in the lamp 36.

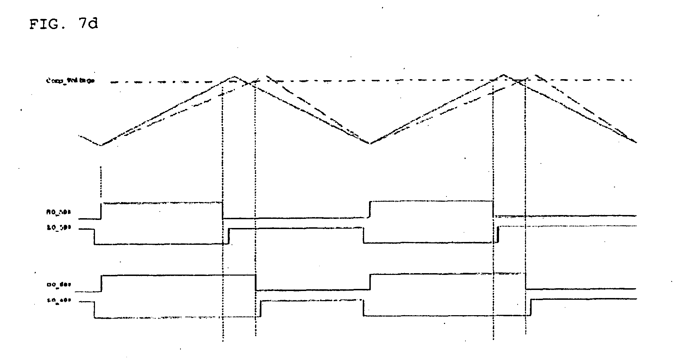

According to the present invention, a duty of a high side pulse of the half-bridge driving circuit is not fixed to 50 percent as in a general half-bridge circuit but varied according to circumstances to 50 percent or more or less, in order to effectively supply the power of the load even at a low AC line input voltage. The relationships between the high and low side pulses are shown in FIG. 7D.

As described above, if there is a variation in current flowing into the lamp 36, a load, from the rectifier circuit 10, the tuned-on times of the high and low side transistors M1 and M2 are varied and thus the maintenance of a constant output of the lamp 36 can be ensured.

Meanwhile, if over-current flows to the transistors due to a malfunction of the lamp 36, this is sensed by the sensing resistor RS and then an operation of the circuit may be stopped. This operation of the circuit is controlled by the shutdown circuit 42 receiving the output of the NOR gate 40. The Vref circuit 421 inactivates the Vref by the output DS of the shutdown circuit 42 to stop oscillation. Then the supply of the auxiliary power is stopped and no current is supplied to the load.

If ambient temperature is high, this is detected by a thermal detector 38 and the operation of the circuit may be stopped.

In addition, over-current flowing into the load due to a malfunction of the load is detected by the load resistor RL and a re-start determiner 43 provides a corresponding signal to the shutdown circuit 42. Thereafter, the operation of the circuit may be stopped.

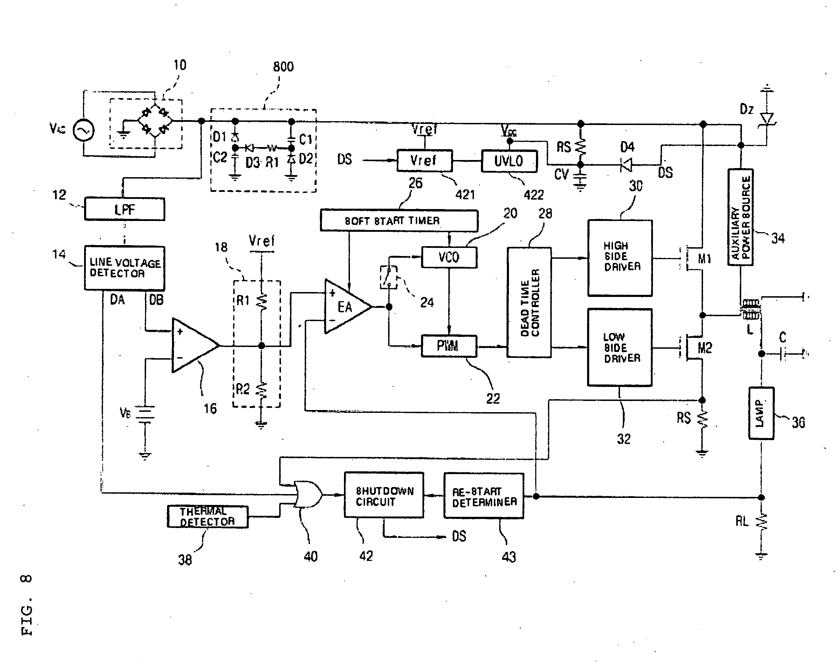

The above-described power supply apparatus according to the present invention may be applied to a ballast using a simple high power factor circuit of a rectifying type having a valley voltage as illustrated in FIG. 8.

A configuration of the power supply apparatus shown in FIG. 8 is the same as that shown in FIG. 1 except for a simple high power factor circuit 800 and elements of a load side. Therefore, a description of repeated construction and operation will be omitted. The simple high power factor circuit 800 including a plurality of diodes D1, D2 and D3, a plurality of capacitors C1 and C2, and a resistor R1 is well known to the art, and therefore a detailed description thereof will not be given.

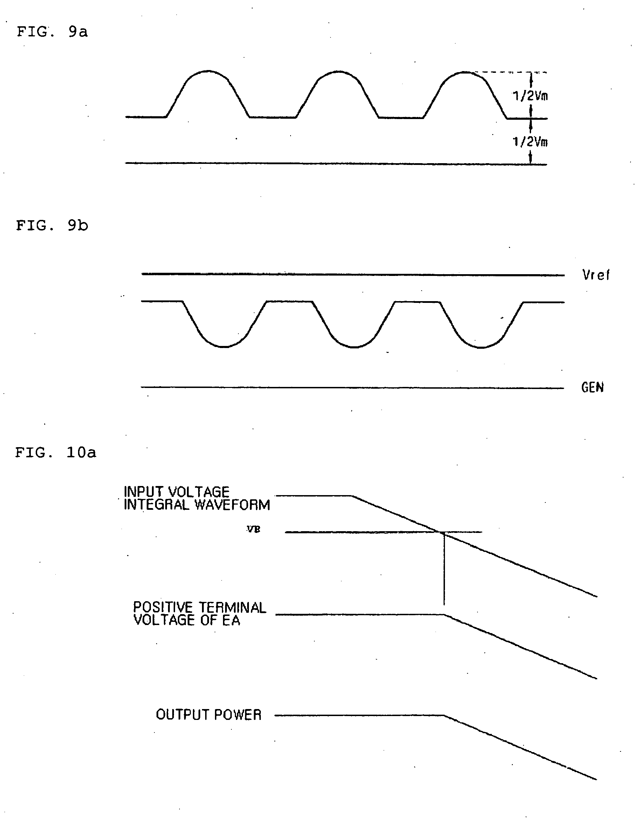

The output of the bridge diode 10 is as illustrated in FIG. 9A by the simple high power factor circuit 800 and the output of the error amplifier EA is as illustrated in FIG. 9B.

That is, during an interval of a high input voltage, a frequency is controlled to be high and a pulse width to be low. During an interval of a low input voltage, a frequency is controlled to be low and a pulse width to be high. Accordingly a constant output is maintained. In this case, the output voltage of the error amplifier EA is a reverse phase to an input as shown in FIG. 9B.

If an input power voltage is lowered under a prescribed level, an output voltage is gradually reduced by the line voltage detector 14, thereby preventing over-current from flowing into driving transistors. This operation may be controlled as illustrated in FIG. 10A.

If the output of the line voltage detector 14 begins to be lower than a reference voltage of the comparator 16, the output current of the comparator 16 is increased in inverse proportion to the lowered voltage. Then the output is lowered by lowering the voltage of the positive terminal of the error amplifier EA that is a feedback reference voltage.

The power supply apparatus according to the present invention controls a power by varying a pulse width and a frequency throughout the entire interval, thereby achieving a high power factor. At the same time, a constant output throughout the entire interval in which an AC input is 180 to 300 volts and a crest factor of the lamp current under 1.5 can be accomplished. Also, the power of a filament can be controlled within ±10 percent.

In other words, if a variation in an input voltage is narrow, the pulse width is mainly controlled to control the output. If a variation in an input voltage is wide, the frequency and the pulse width are controlled together according to the input voltage by widening a frequency variable range. Hence, the constant output can be maintained even for a variation in a wideband input voltage.

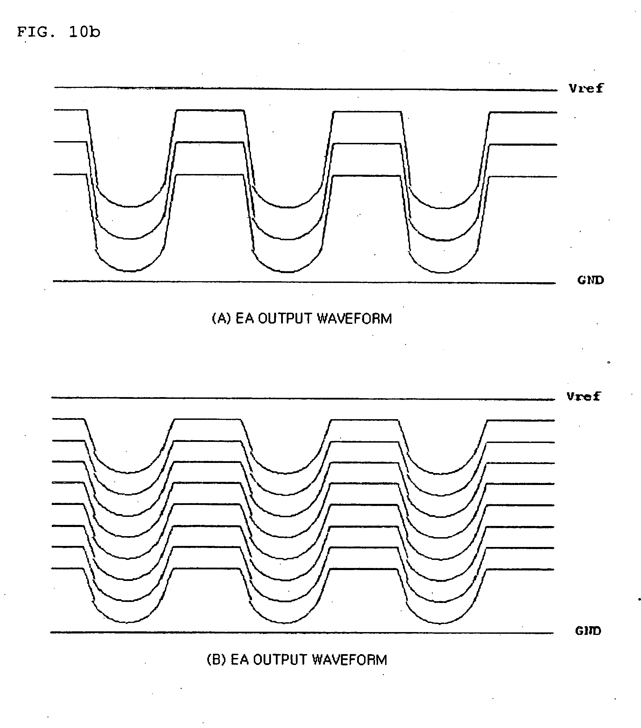

The above operation is illustrated in FIG. 10B.

Referring to FIG. 10B, (A) designates an output waveform of the error amplifier EA for a narrow input voltage variable range when it is desired to control the output by mainly varying the pulse width, and (B) designates an output waveform of the error amplifier EA for a wide input voltage variable range when it is desired to control the output by increasing the frequency variable range and varying the pulse width.

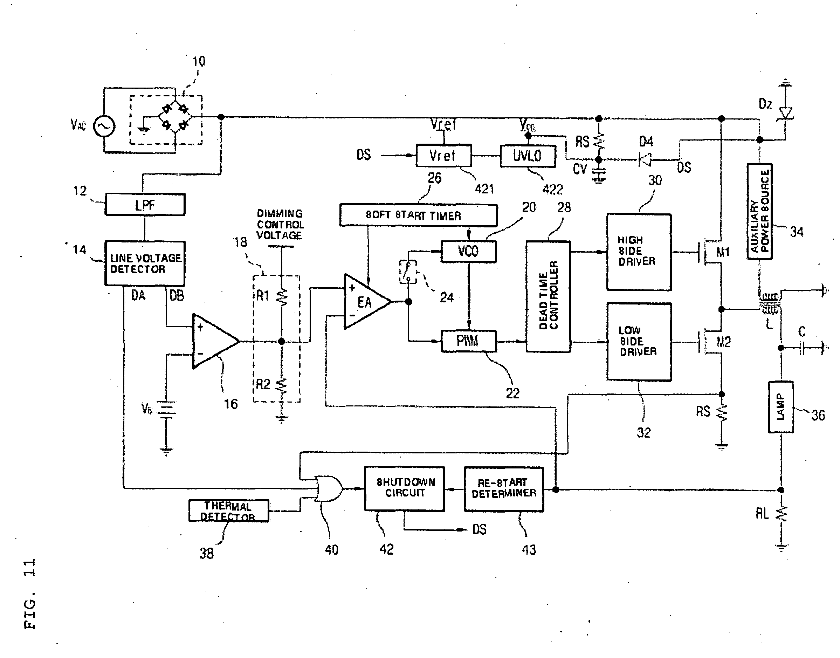

The power supply apparatus according to the present invention may be applied to a dimming ballast as illustrated in FIG. 11. A dimming control voltage is supplied to the voltage divider 18, instead of the reference voltage Vref.

The output of the error amplifier EA is varied as the reference voltage thereof is changed. If the dimming control voltage is applied to the resistor R1 determining the reference voltage of the error amplifier EA, since the output current is controlled according to the applied voltage, the brightness of the lamp 36 can be adjusted.

In reducing the amount of feedback by lowering the reference voltage of the error amplifier EA in order to lower illumination, energy supplied to the filament can be efficiently limited by raising a frequency and simultaneously reducing a pulse width, compared to a method for lowering illumination by increasing only the frequency. In addition, since the amount of variation in a frequency is very small, low illumination dimming can be obtained without greatly departing from an optimal resonance condition. Therefore, the above construction is preferable to lower illumination.

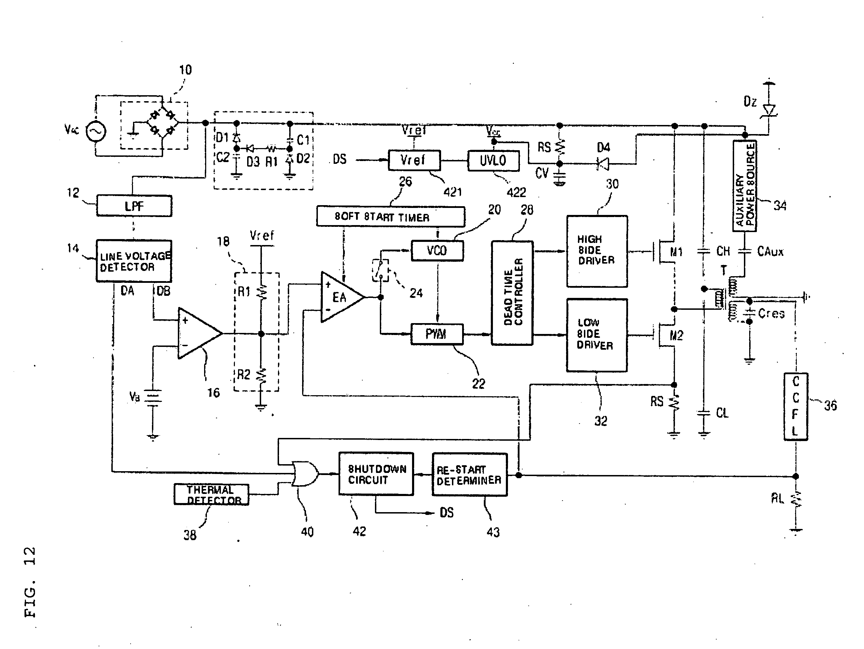

The power supply apparatus according to the present invention is applicable to a cold cathode fluorescent lamp (CCFL) inverter circuit using a simple high power factor circuit of a rectifying type having a valley voltage as illustrated in FIG. 12. The operation of the power supply apparatus illustrated in FIG. 12 is the same as the above-described embodiments. Therefore, a detailed description thereof will be omitted.

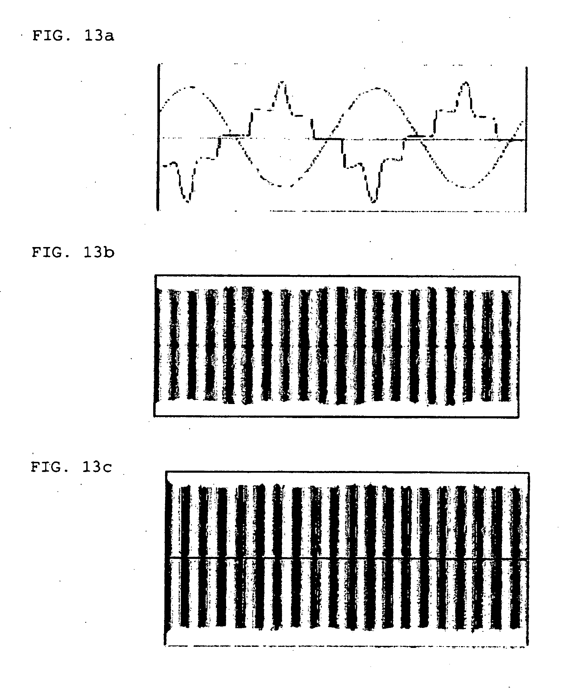

Voltage-current characteristics of an input versus a load in the above-described embodiments of the present invention are illustrated in FIGs. 13A to 13C.

FIG. 13A illustrates waveforms of an input current and an input voltage, FIG. 13B a waveform of an output voltage, and FIG. 13C a waveform of an output current. Referring to FIGs. 13A to 13C, it will be appreciated that the output voltage and current are stabilized and a high power factor and low crest factor can be achieved.

As apparent from the foregoing description, the power supply apparatus according to the present invention is applicable to a fluorescent lamp ballast and a CCFL inverter circuit of a half-bridge type. The power supply apparatus varies a frequency of a narrow band and controls a pulse width, thereby improving an output control dynamic characteristic.

Even in a high power factor rectifying circuit condition of a positive type having a valley voltage, the ballast and inverter can achieve a constant output for a wide input voltage variation and stable control with a low tube current crest factor.

Moreover, since a circuit is operated in an optimal resonance condition by achieving a very high dynamic characteristic while narrowing a frequency variable width, the light conversion efficiency of the ballast or inverter is increased. In addition, since a variation in energy flowing into the filament in a fluorescent lamp ballast is very small, the life of the tube can be extended.

If a conventional half-bridge circuit is used, a control dynamic characteristic is degraded when there are a variation in a voltage and a deviation in a tube. Then a current crest factor of the tube is deteriorated and electrostatic force is unstable. Furthermore, since a width of a frequency variation is wide, a variation in current flowing into the filament is increased, and the light conversion efficiency is lowered. In addition, since the life of the tube is greatly shortened, actual use is difficult.

The inventive technique can be used for the dimming of a fluorescent lamp or a CCFL and can control stable dimming up to very low luminance incomparable to the existing control technique.

## Claims

1. A power supply apparatus comprising a full wave rectifier bridge (10) for rectifying an ac inptut voltage (Vac) and providing the rectified ac voltage to a half bridge (M1,M2) to which a load (36) is connected, the power supply further comprising:
a line voltage detecting means (12, 14) for detecting the rectified voltage;
an error amplifying means (16, 18, EA) for comparing the voltage detected from the line voltage detecting means (12, 14) with a reference voltage (VB) and outputting a voltage corresponding to a difference therebetween, wherein the error amplifying means (16, 18, EA) further comprises:
a comparator (16) for comparing the voltage detected from the line voltage detecting means (12, 14) with a constant voltage;
a voltage divider (18) for adding an output of the comparator (16) to a divided reference voltage; and
an error amplifier (EA) for comparing a voltage provided by the voltage divider (18) with a feedback voltage of a voltage supplied to the load (36) and outputting a signal corresponding to a difference therebetween; the apparatus further comprising:
a pulse width modulating means (22) for outputting a pulse having a variable width corresponding to an output level of the error amplifying means (16, 18, EA);
a dead time controlling means (28) for outputting a first pulse corresponding to a high side and a second pulse corresponding to a low side by the pulse output from the pulse width modulating means (22), wherein the first and second pulses have different pulse widths and different rising and falling time points; and
a driving means (30, 32) for driving the power source supplied to the load (36) as a constant current state by the first and second pulses.

2. The power supply apparatus as defined in claim 1, wherein the line voltage detecting means (12, 14) includes:
a low pass filter (12) for smoothing the input power source (Vac) and converting the smoothed input power source into a direct current (DC) voltage; and
a line voltage detector (14) for supplying an output signal to the error amplifying means (16, 18, EA) if the voltage of the low pass filter (12) is less than a prescribed level.

3. The power supply apparatus as defined in claim 2, wherein the line voltage detector (14) further generates an output signal having a logic value if the voltage of the low pass filter (12) is more than a prescribed level.

4. The power supply apparatus as defined in claim 1, wherein the voltage divider (18) receives a dimming control voltage instead of the reference voltage.

5. The power supply apparatus as defined in claim 1, further comprising a voltage controlled oscillator (20) for providing a variable frequency corresponding to an output level of the error amplifying means (16, 18, EA) to the pulse width modulating means (22), wherein the pulse width modulating means (22) generates a pulse having a frequency of a signal provided by the voltage controlled oscillator (20) and a variable pulse width corresponding to the output level of the error amplifying means (16, 18, EA).

6. The power supply apparatus as defined in claim 5, further comprising a soft start timer (26) for controlling the voltage controlled oscillator (20) and the error amplifying means (16, 18, EA) during initial starting, controlling an output to be a high frequency and a maximum pulse width during initial power source supply, gradually lowering a frequency, and stopping an operation after a given time elapses.

7. The power supply apparatus as defined in claim 1, wherein the dead time controlling means (28) includes:
a first delay for outputting the first pulse applying a first dead time by delaying a rising time point of an output of the pulse width modulating means (22) by a given time; and
a second delay for outputting the second pulse applying a second dead time by inverting the output of the pulse width modulating means (22) and then delaying a falling time point of the inverted signal by a given time.

8. The power supply apparatus as defined in claim 1, wherein the driving means includes:
a high side driver (30) for outputting a high side driving signal by the first pulse;
a low side driver (32) for outputting a low side driving signal by the second pulse;
a first switching device for switching the high side of the AC power source (Vac) supplied to the load (36) by an output of the high side driver (30); and
a second switching device for switching the low side of the AC power source (Vac) provided to the load (36) by an output of the low side driver (32).

9. The power supply apparatus as defined in claim 1, further comprising a high power factor circuit (800) for controlling a power factor of the input power source (Vac) provided to the load (36).

10. The power supply apparatus as defined in claim 1, wherein the load (36) is a cold cathode fluorescent lamp (CCFL).

11. The power supply apparatus as defined in claim 8, wherein the load (36) is a cold cathode fluorescent lamp (CCFL).

## Patentansprüche

1. Energieversorgungsvorrichtung mit einer Zweiweggleichrichterbrücke (10), um eine AC-Eingangsspannung (Vac) gleichzurichten und die gleichgerichtete AC-Spannung einer Halbbrücke (M1, M2) bereitzustellen, an die ein Verbraucher (36) angeschlossen ist, wobei die Energieversorgung darüber hinaus aufweist:
eine Leitungsspannungserfassungseinrichtung (12, 14), um die gleichgerichtete Spannung zu erfassen;
eine Fehlerverstärkungseinrichtung (16, 18, EA), um die von der Leitungsspannungserfassungseinrichtung (12, 14) erfasste Spannung mit einer Referenzspannung (VB) zu vergleichen und eine Spannung auszugeben, die einer Differenz zwischen diesen Spannungen entspricht, wobei die Fehlerverstärkungseinrichtung (16, 18, EA) darüber hinaus aufweist:
eine Vergleichseinrichtung (16), um die von der Leitungsspannungserfassungseinrichtung (12, 14) erfasste Spannung mit einer konstanten Spannung zu vergleichen;
einen Spannungsteiler (18), um einen Ausgang der Vergleichseinrichtung (16) zu einer geteilten Referenzspannung zu addieren; und
einen Fehlerverstärker (EA), um eine durch den Spannungsteiler (18) bereitgestellte Spannung mit einer Rückkopplungsspannung einer dem Verbraucher (36) zugeführten Spannung zu vergleichen und ein Signal auszugeben, das einer Differenz zwischen diesen Spannungen entspricht; wobei die Vorrichtung darüber hinaus aufweist:
eine Pulsweitenmodulationseinrichtung (22), um einen Impuls mit einer variablen Weite entsprechend einem Ausgangspegel der Fehlerverstärkungseinrichtung (16, 18, EA) auszugeben;
eine Totzeitsteuereinrichtung (28), um einen ersten Impuls, der einer Hochpegelseite, und einen zweiten Impuls, der einer Tiefpegelseite entspricht, durch den von der Pulsweitenmodulationseinrichtung (22) ausgegebenen Impuls auszugeben, wobei der erste und zweite Impuls verschiedene Pulsweiten und verschiedene Anstieg- und Abfallzeitpunkte haben; und
eine Ansteuereinrichtung (30, 32), um die Quelle der Energie, mit der der Verbraucher (36) versorgt wird, durch den ersten und zweiten Impuls in einem Zustand konstanten Stroms anzusteuern.

2. Energieversorgungsvorrichtung nach Anspruch 1, wobei die Leitungsspannungserfassungseinrichtung (12, 14) umfasst:
ein Tiefpassfilter (12), um die Eingangsspannung (Vac) zu glätten und die geglättete Eingangsspannung in eine Gleichstromspannung (DC), umzusetzen; und
eine Leitungsspannungserfassungseinrichtung (14), um an die Fehlerverstärkungseinrichtung (16, 18, EA) ein Ausgangssignal zu liefern, wenn die Spannung des Tiefpassfilters (12) unter einem vorbestimmten Pegel liegt.

3. Energieversorgungseinrichtung nach Anspruch 2, wobei die Leitungsspannungserfassungseinrichtung (14) darüber hinaus ein Ausgangssignal mit einem logischen Wert generiert, wenn die Spannung des Tiefpassfilters (12) über einem vorbestimmten Pegel liegt.

4. Energieversorgungsvorrichtung nach Anspruch 1, wobei der Spannungsteiler (18) eine Dimmsteuerspannung anstelle der Referenzspannung empfängt.

5. Energieversorgungsvorrichtung nach Anspruch 1, darüber hinaus einen spannungsgesteuerten Oszillator (20) aufweisend, um der Pulsweitenmodulationseinrichtung (22) entsprechend einem Ausgangspegel der Fehlerverstärkungseinrichtung (16, 18, EA) eine variable Frequenz bereitzustellen, wobei die Pulsweitenmodulationseinrichtung (22) einen Puls mit einer Frequenz eines durch den spannungsgesteuerten Oszillator (20) bereitgestellten Signals und einer variablen Pulsweite entsprechend dem Ausgangspegel der Fehlerverstärkungseinrichtung (16, 18, EA) generiert.

6. Energieversorgungsvorrichtung nach Anspruch 5, darüber hinaus einen Sanftanlauf-Zeitgeber (26) aufweisend, um den spannungsgesteuerten Oszillator (20) und die Fehlerverstärkungseinrichtung (16, 18, EA) während eines Anfangsanlaufs zu steuern, einen Ausgang auf eine hohe Frequenz und eine maximale Pulsweite während einer Anfangsenergiequellenzufuhr zu steuern, eine Frequenz schrittweise zu senken, und einen Betrieb anzuhalten, nachdem eine bestimmte Zeit verstrichen ist.

7. Energieversorgungsvorrichtung nach Anspruch 1, wobei die Totzeitsteuereinrichtung (28) umfasst:
eine erste Verzögerung, um den ersten Impuls unter Anlegen einer ersten Totzeit auszugeben, indem ein Anstiegzeitpunkt eines Ausgangs der Pulsweitenmodulationseinrichtung (22) um eine bestimmte Zeit verzögert wird; und
eine zweite Verzögerung, um den zweiten Impuls unter Anlegen einer zweiten Totzeit auszugeben, indem der Ausgang der Pulsweitenmodulationseinrichtung (22) invertiert und dann ein Abfallzeitpunkt des invertierten Signals um eine bestimmte Zeit verzögert wird.

8. Energieversorgungsvorrichtung nach Anspruch 1, wobei die Ansteuereinrichtung umfasst:
einen hochpegelseitigen Treiber (30), um ein hochpegelseitiges Ansteuersignal durch den ersten Impuls auszugeben;
einen tiefpegelseitigen Treiber (32), um ein tiefpegelseitiges Ansteuersignal durch den zweiten Impuls auszugeben;
eine erste Schaltvorrichtung, um die Hochpegelseite der Quelle der AC-Spannung (Vac), mit der der Verbraucher (36) versorgt wird, durch einen Ausgang des hochpegelseitigen Treibers (30) zu schalten; und
eine zweite Schaltvorrichtung, um die Tiefpegelseite der Quelle der AC-Spannung (Vac), mit der der Verbraucher (36) versorgt wird, durch einen Ausgang des tiefpegelseitigen Treibers (32) zu schalten.

9. Energieversorgungsvorrichtung nach Anspruch 1, darüber hinaus eine Hochleistungsfaktorschaltung (800) aufweisend, um einen Leistungsfaktor der Quelle der Eingangsspannung (Vac), mit der der Verbraucher (36) versorgt wird, zu steuern.

10. Energieversorgungsvorrichtung nach Anspruch 1, wobei es sich bei dem Verbraucher (36) um eine Kaltkathoden-Leuchtstofflampe (CCFL - cold cathode fluorescent lamp) handelt.

11. Energieversorgungsvorrichtung nach Anspruch 8, wobei es sich bei dem Verbraucher (36) um eine Kaltkathoden-Leuchtstofflampe (CCFL - cold cathode fluorescent lamp) handelt.

## Revendications

1. Une alimentation de puissance, comprenant un pont redresseur pleine-onde (10), pour redresser une tension d'entrée de courant alternatif (Vac) et fournir la tension d'entrée de courant alternatif redressée à un demi-pont (M1, M2) auquel est connecté une charge (36), l'alimentation de puissance comprenant en outre :
des moyens de détection de tension de ligne (12, 14), pour détecter la tension redressée ;
des moyens d'amplification d'erreur (16, 18, EA), pour comparer la tension, détectée par les moyens de détection de tension de ligne (12, 14), à une tension de référence (VB) et fournir en sortie une tension correspondant à une différence entre elles, dans laquelle les moyens d'amplification d'erreur (16, 18, EA) comprennent en outre :
un comparateur (16), pour comparer la tension détectée par les moyens de détection de tension de ligne (12, 14) à une tension constante ;
un diviseur de tension (18), pour ajouter un signal de sortie du comparateur (16) à une tension de référence divisée ; et
un amplificateur d'erreur (EA), pour comparer une tension fournie par le diviseur de tension (18) à une tension de réaction d'une tension fournie à la charge (36) et fournir en sortie un signal correspondant à une différence entre elles ; l'alimentation comprenant en outre :
des moyens de modulation de la largeur d'impulsion (22), pour fournir en sortie une impulsion ayant une largeur variable, correspondant à un niveau de sortie des moyens d'amplification d'erreur (16, 18, EA) ;
des moyens de contrôle de temps mort (28), pour fournir en sortie une première impulsion correspondant à un côté haut et une deuxième impulsion correspondant à un côté bas, par l'impulsion produite par les moyens de modulation de la largeur d'impulsion (22), dans laquelle les première et deuxième impulsions ont des largeurs d'impulsion différentes et des moments de montée et de chute différents ; et
des moyens de commande (30, 32), pour commander la source d'énergie fournie à la charge (36), dans un état à courant constant, par les première et deuxième impulsions.

2. L'alimentation de puissance selon la revendication 1, dans laquelle les moyens de détection de tension de ligne (12, 14) comprennent :
un filtre passe-bas (12), pour lisser la source d'énergie d'entrée (Vac) et convertir la source d'énergie d'entrée lissée en une tension à courant continu (DC) ; et
un détecteur de tension de ligne (14), pour fournir un signal de sortie aux moyens d'amplification d'erreur (16, 18, EA), si la tension du filtre passe-bas (12) est inférieure à un niveau prescrit.

3. L'alimentation de puissance selon la revendication 2, dans laquelle le détecteur de tension de ligne (14) génère en outre un signal de sortie ayant une valeur logique, si la tension du filtre passe-bas (12) est supérieure à un niveau prescrit.

4. L'alimentation de puissance selon la revendication 1, dans laquelle le diviseur de tension (18) reçoit une tension de commande d'atténuation, au lieu de la tension de référence.

5. L'alimentation de puissance selon la revendication 1, comprenant en outre un oscillateur commandé en tension (20), pour fournir une fréquence variable, correspondant à un niveau de sortie des moyens d'amplification d'erreur (16, 18, EA), aux moyens de modulation de la largeur d'impulsion (22), dans laquelle les moyens de modulation de la largeur d'impulsion (22) génèrent une impulsion ayant une fréquence d'un signal fourni par l'oscillateur commandé en tension (20), et une largeur d'impulsion variable correspondant au niveau de sortie des moyens d'amplification d'erreur (16, 18, EA).

6. L'alimentation de puissance selon la revendication 5, comprenant en outre un minuteur de démarrage en douceur (26), pour commander l'oscillateur commandé en tension (20) et les moyens d'amplification d'erreur (16, 18, EA) durant le démarrage initial, commander une sortie devant être une haute fréquence et une largeur d'impulsion maximale durant l'alimentation par la source de puissance initiale, en abaissant graduellement une fréquence, et en stoppant un fonctionnement après expiration d'une durée donnée.

7. L'alimentation de puissance selon la revendication 1, dans laquelle les moyens de contrôle de temps mort (28) comprennent :
un premier délai, pour fournir en sortie la première impulsion, en appliquant un premier temps mort par retardement d'un temps donné d'un moment de montée d'un signal de sortie des moyens de modulation de la largeur d'impulsion (22) ; et
un deuxième délai, pour fournir en sortie la deuxième impulsion, en appliquant une deuxième temps mort par inversion du signal de sortie des moyens de modulation de la largeur d'impulsion (22) et, ensuite, retarder d'un temps donné un moment de chute du signal inversé.

8. L'alimentation de puissance selon la revendication 1, dans laquelle les moyens de commande comprennent :
un pilote de côté haut (30), pour fournir en sortie un signal de commande de côté haut par la première impulsion ;
un pilote de côté bas (32), pour fournir en sortie un signal de commande de côté bas par la deuxième impulsion ;
un premier dispositif de commutation, pour commuter le côté haut de la source d'énergie de courant alternatif (Vac) fournie à la charge (36), par un signal de sortie du pilote de côté haut (30) ; et
un deuxième dispositif de commutation, pour commuter le côté bas de la source d'énergie de courant alternatif (Vac) fournie à la charge (36), par un signal de sortie du pilote de côté bas (32).

9. L'alimentation de puissance selon la revendication 1, comprenant en outre un circuit à facteur de puissance élevé (800), pour commander un facteur de puissance de la source d'énergie d'entrée (Vac) fournie à la charge (36).

10. L'alimentation de puissance selon la revendication 1, dans laquelle la charge (36) est une lampe fluorescente à cathode froide (CCFL).

11. L'alimentation de puissance selon la revendication 8, dans laquelle la charge (36) est une lampe fluorescente à cathode froide (CCFL).
